# EUROPEAN PATENT APPLICATION

(11) **EP 4 205 979 A1**
(43) Date of publication of application: **05.07.2023**
(21) Application number: 21861515.1
(22) Date of filing: 24.08.2021
(51) Int. Cl.: B33Y 10/00, B33Y 80/00, B29C 64/106, B29C 64/40, B33Y 70/00

(54) **SUPPORT MATERIAL FOR LAMINATED MOLDING, AND METHODS FOR MANUFACTURING LAMINATED MOLDED OBJECT AND THREE-DIMENSIONAL STRUCTURE USING SAME**

(30) Priority: 31.08.2020 JP 2020145922; 31.08.2020 JP 2020145923
(71) Applicant: Mitsubishi Chemical Corporation, Chiyoda-ku Tokyo 100-8251 (JP)
(72) Inventor: FUKUDA, Junki, Tokyo 100-8251 (JP); SAKAI, Norihito, Tokyo 100-8251 (JP)
(74) Representative: Vossius & Partner Patentanwälte Rechtsanwälte mbB
(86) International application number: PCT/JP2021/030883
(87) International publication number: WO 2022/045090

(57) **Abstract**

Provided is a support material for fused deposition modeling capable of being supplied in the form of filament excellent in flexibility and uniformity of wire diameter. The support material comprises a polyvinyl alcohol-based resin (A) and a polylactone (B) having a specific molecular weight in a specific content. The filamentous support material is excellent in productivity. Moreover, the support material portion after the fused deposition modeling can be removed by washing by use of water, The resulting waste liquid is biodegradable and thus the support material is environmentally friendly.

## Description

### TECHNICAL FIELD

The present invention relates to a filamentous support material for fused deposition modeling, which is excellent in shape-forming properties and can be removed by use of water after the production of the fused deposition modeled structure. The present invention also relates to a method of manufacturing a fused deposition modeled structure and a three-dimensional object using the same.

### BACKGROUND

A fused deposition modeling is a method of forming a three-dimensional object having a desired shape, in which a fluid material is extruded, solidified to form a layer, and the fluid material is extruded on top of the previous layer and solidified to create an object layer by layer. The method of manufacturing a three-dimensional object includes a UV curing method, a fused deposition modeling method, and the like. The fused deposition modeling method can be executed using a simple apparatus and is widely utilized.

In a fused deposition modeling for forming a three-dimensional object, a support structure which is auxiliary for infilling a target three-dimensional object is formed during the fused deposition modeling. The support structure is a mere auxiliary part during the printing process of the target three-dimensional object, and therefore needs to be removed from the fused deposition modeled structure after the printing process.

Dissolution of a support structure with a solvent is a simple method capable of removing the support structure without damaging a target model. In the case of using a polyvinyl alcohol-based resin (PVA-based resin) as a support material, water can be used as a solvent because of water solubility of the PVA-based resin. And the removal operation by use of water is safe and environmentally friendly.

Various resins such as acrylonitrile-butadiene-styrene (ABS)-based resin, polylactic acid (PLA)-based resin, polystyrene, polyamide, and polyethylene have been reviewed as a material (model material) for constructing a desired three-dimensional object. Among these resins, ABS-based resins and PLA-based resins are widely used because of their adequate melt-molding property, thermal stability, and mechanical properties of the solidified material. Therefore, the support material is required to have excellent adhesion to at least one of ABS-based resin and PLA-based resin.

JP 2018-099788 A (Patent Document 1) has proposed a support material for fused deposition modeling which adopts a composition comprising a side chain 1,2-diol-containing PVA-based resin and a biodegradable polyester. This support material can be provided in the form of filament by imparting flexibility to the PVA-based resin. Further, the wastewater generated in the removal operation using water is biodegradable, which is preferable from the viewpoint of green chemistry in recent years.

However, the support material proposed in Patent Document 1 uses a side chain 1,2-diol-containing PVA-based resin as the PVA-based resin. The side chain 1,2-diol-containing PVA-based resin is desired to be replaced with an unmodified PVA-based resin for cost reduction and versatility.

In this regard, JP 2019-531214 A (Patent document 2) proposes a support material for fused deposition modeling. The support material is a mixture obtained by adding vinyl acetate-vinylpyrrolidone copolymer (Examples 1 through 3), polycaprolactone (Examples 5 and 6), ABS (Example 7) and PLA (Examples 8 and 9) to an unmodified PVA-based resin having a specific range of polymerization degree and saponification degree. The Patent document 2 discloses that a support material can be 3-dimensionally printed at high speed and has excellent adhesion to a model material made of PLA.

### PRIOR ART

### PATENT DOCUMENT

[Patent Document 1] JP 2018-099788 A
[Patent Document 2] JP 2019-531214 A

### SUMMARY OF THE INVENTION

### TECHNICAL PROBLEM TO BE SOLVED BY THE INVENTION

A common support material for the fused deposition modeling is in the form of filament wound around a reel, and the reel is provided to the market as a support material capable of continuously supplying during the printing process. Therefore, a filamentous support material should be durable without being broken or torn during winding process of the filament. Further, the filamentous supporting material is desired to be flexible enough to create a complicated shape by a fused deposition modeling. Moreover, from the viewpoint of the dimensional accuracy of the fused deposition modeled structure, the filamentous support material has a highly uniformity in diameter of the filament. The diameter of the filament corresponds to a wire diameter of the filamentous support material drawn from the reel.

The support material disclosed in Patent Document 2 has not been evaluated with respect to the productivity of a filamentous support material and the properties of the resulting filamentous support material. Therefore, there is room for improving productivity of the support material as well as quality of the produced filamentous support material.

Under these circumstances, the present invention has been made. The purpose of the invention is to provide a support material for fused deposition modeling that is excellent in productivity of the filamentous support material and that allows easy disposal of waste liquid generated in the removal operation after fused deposition modeling. A method for manufacturing a fused deposition modeled structure and a three-dimensional object using the same are also provided.

### MEANS FOR SOLVING THE PROBLEM

As a result of intensive research regarding the above circumstances, the present inventors have found that adjusting a molecular weight and/or content of polycaprolactone which is added to a PVA-based resin to a specific range may improve the flexibility, water solubility, and filament diameter stability of the support material made of the resin composition, and have completed the present invention.

The support material for fused deposition modeling of the present invention comprises (A) a polyvinyl alcohol-based resin and (B) a polylactone wherein the (B) polylactone has a number average molecular weight of 20000 to 70000.

In another aspect of the present invention, a support material for fused deposition modeling comprises (A) a polyvinyl alcohol-based resin; and (B) a polylactone wherein the content of the (B) polylactone is from 27 to 60 parts by weight per 100 parts by weight of the (A) polyvinyl alcohol-based resin.

According to the invention, a preferred embodiment of the support material for fused deposition modeling is a support material comprising (A) a polyvinyl alcohol-based resin and (B) a polylactone, wherein the polylactone (B) has a number average molecular weight of 20000 to 70000, and the content of the polylactone (B) is from 27 to 60 parts by weight per 100 parts by weight of the polyvinyl alcohol-based resin (A).

The saponification degree of the polyvinyl alcohol resin (A) may be preferably from 72 to 80 mol%. Also, the polylactone (B) may be preferably polycaprolactone. In another aspect of the invention, a preferred polylactone (B) has a melting point of 50 to 80°C as measured by differential scanning calorimetry (DSC method).

A preferred embodiment of the support material for fused deposition modeling of the invention is a filament having a diameter of 1.5 to 3 mm.

Yet another aspect of the present invention, a method of producing a fused deposition modeled structure is provided. The method comprises supplying a molten model material and a support material in a molten state, on top of the preciously supplied model material and support material, wherein the support material is any one of the support materials for fused deposition modeling of the invention.

Further yet another aspect, the present invention also includes a method for producing a three-dimensional object. The method comprises contacting a fused deposition modeled structure with water, wherein the fused deposition modeled structure is produced by the above method.

### EFFECT OF THE INVENTION

The support material for fused deposition modeling of the present invention can be provided in the form of long filament with little variation in wire diameter, and moreover, the filament is flexible enough to avoid from easily broken or torn. Therefore, by using such a filamentous support material, a fused deposition modeling with precision may be achieved efficiently.

Furthermore, the support material of the present invention is environmentally friendly because the support material can be removed by washing with water after the fused deposition modeling, and the waste liquid generated after the washing operation is biodegradable.

The biodegradability in the present invention refers to comply with one or more of criteria in accordance with EN 13432, EN 14995, ASTM D6400, ASTM D6868, ISO 18606, ISO 17088, JIS K6960, OK Compost, etc.

### EMBODIMENT FOR CARRYING OUT THE INVENTION

Hereinafter, the present invention will be described in detail, but the following are mere examples of desirable embodiments.

### [Support material for fused deposition modeling]

A support material for fused deposition modeling (hereinafter simply referred to as "support material") of the present invention comprises (A) a polyvinyl alcohol-based resin (PVA-based resin) and (B) a polylactone wherein the content of the (B) polylactone is within a specific range.

### (1) PVA-based resin (A)

The PVA-based resin (A) used in the invention may be either unmodified PVA-based resin or modified PVA-based resin. However, unmodified PVA-based resin is preferable because it has excellent water solubility and compatibility with a hydrophobic polylactone such as polycaprolactone.

A modified PVA-based resin may be a PVA-based resin having a primary hydroxyl group in the side chain thereof, such as PVA-based resin having a 1,2-diol structure in the side chain, and hydroxymethyl group-containing PVA-based resin having a vinylidene-type 1 ,3-diol structure in the main chain thereof; olefinmodified PVA-based resin such as ethylene-modified PVA-based resin, and propylene-modified PVA-based resin; oxyalkylene-modified PVA-based resin such as ethylene oxide-modified PVA-based resin, and propylene oxide-modified PVA-based resin, or the like.

The saponification degree of the PVA-based resin (A) is usually from 72 to 99 mol%, preferably 73 mol% or more, more preferably 75 mol% or more, but preferably 90 mol % or less, more preferably 80 mol % or less, as measured according to JIS K6726.

The average polymerization degree of the PVA-based resin (A) is usually from 200 to 2000, preferably from 250 to 1000, and particularly preferably from 300 to 500, as measured according to JIS K6726.

An unduly low average of polymerization degree becomes unstable in fused deposition modeling, and results in being difficult to obtain a fused deposition modeled structure having a targeted dimension.

One or two or more types of PVA-based resins may be contained as the polyvinyl alcohol-based resin (A) in the support material. When two or more types of PVA-based resins are contained, a combination of unmodified PVA and modified PVA-based resin, a combination of unmodified PVAs having different saponification degrees, average polymerization degree, modified species, or modification degrees, etc., and a combination of modified PVA-based resins may be used.

### (2) Polylactone (B)

The polylactone (B) used in the invention is a polymer obtained by ring-opening of a lactone compound represented by the following formula.

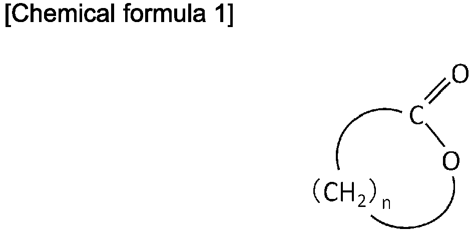

In the formula, n is an integer of 2 to 14, preferably 2 to 10, more preferably 2 to 8. Therefore, preferable examples of the lactones include β-propiolactones, γ-butyrolactones, δ-valerolactones, ε-caprolactones and the like.

Examples of the β-propiolactones include β-propiolactone and dimethylpropionlactone.

Examples of the γ-butyrolactones include butyrolactone, γ-valerolactone, γ-caprolactone, γ-caprilolactone, γ-laurolactone, γ-palmitolactone, γ-stearolactone, crotonolactone, α-angelica lactone and β-angelica lactone.

Examples of the ε-caprolactones include monoalkyl-ε-caprolactones such as ε-caprolactone, monomethyl-ε-caprolactone, monoethyl-ε-caprolactone, monodecyl-ε-caprolactone and monopropyl-ε-caprolactone; dialkyl-ε-caprolactone in which two alkyl groups are added to carbon atom(s) other than ε positioned carbon atom; trialkyl-ε-caprolactone in which three alkyl groups are added to carbon atom(s) other than ε positioned carbon atom; alkoxy-ε-caprolactone such as ethoxy-ε-caprolactone; cycloalkyl-lactones such as cyclohexyl-ε-caprolactone; aralkyl-ε-caprolactone such as benzyl-ε-caprolactone; aryl-ε-caprolactone such as phenyl-ε-caprolactone; caprolactone modified with a dicarboxylic anhydride such as maleic anhydride or itaconic anhydride.

Examples of the δ-valerolactones include 5-valerolactone, 3-methyl-5-valerolactone, 3,3-dimethyl-5-valerolactone, 2-methyl-5-valerolactone, and 3-ethyl-5-valerolactone and the like.

Among the above lactones, ε-caprolactone is preferable because it may give a polymer having compatibility with a water soluble PVA-based resins in a support material. The polymer is a polycaprolactone obtained by ring-opening of ε-caprolactone and has a repeating unit shown below.

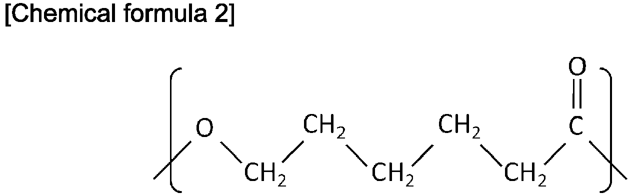

Polycaprolactone is obtained by a ring-opening polymerization of ε-caprolactone optionally together with a diol (such as ethylene glycol or diethylene glycol) in the presence of a catalyst. The polycaprolactone has a microbial disintegration property. As the catalyst for the ring-opening polymerization, an organic tin compound, an organic titanium compound, or an organic tin halide compound may be used. The catalyst is added in an amount of 0.1 to 5000 ppm. The reaction temperature is preferably in the range of 100 to 230°C, and the polymerization is preferably carried out in an inert gas.

The polymerization degree or number average molecular weight of polylactone (B) affects water solubility of the support material. The number average molecular weight is preferably from 20000 to 70000, more preferably from 30000 to 60000, and still more preferably from 40000 to 55000, because the support material having such a number average molecular weight can be removed by washing with water and become a less insoluble matter in the waste liquid after the washing operation. If the number average molecular weight is too low, the flexibility of the filamentous support material tends to be poor. Also, unduly large or unduly small of number average molecular weight may cause instability in diameter of the filamentous support material and decreases the productivity of the filamentous support material.

The polylactone (B) has a melting point of preferably 50 to 80°C, more preferably 55 to 70°C, furthermore preferably 58 to 60°C, as measured by differential scanning calorimetry. A polylactone having unduly low melting point may be difficult to being melt-kneaded with the PVA-based resin (A).

The polylactone (B) has a melt flow rate of preferably about 1 g/10 min to 100 g/10 min, more preferably about 5 g/10 min to 50 g/10 min, under a condition of 160°C and 21.6 kg.

The content of the polylactone (B) in the support material is in the range of 27 to 65 parts by weight, preferably 30 parts by weight or more, more preferably 35 parts by weight or more, and still more preferably 40 parts by weight or more, but the preferred upper limit is 60 parts by weight or less, more preferably 58 parts by weight or less, even more preferably 55 parts by weight or less, and particularly preferably 49 parts by weight or less with respect to 100 parts by weight of the polyvinyl alcohol-based resin (A). Unduly small content of the polylactone (B) may not give excellent flexibility and adhesion to the support material, and the resulting support material would have poor flexibility and adhesion. On the other hand, unduly high content of the polylactone (B) relatively lowers the content of the PVA-based resin in the support material, the resulting support material would have a decreased water solubility, and as a result, an aggregate would be generated in the waste liquid after the washing operation. The treatment of the waste liquid may be troublesome.

Therefore, the polylactone (B) in the support material preferably has a number average molecular weight of 20000 to 70000 and a content of 27 to 65 parts by weight per 100 parts by weight of the polyvinyl alcohol-based resin (A). Furthermore, a preferable polylactone (B) is polycaprolactone.

In the supporting material having the above composition, the polylactone (B) is dispersed in the PVA-based resin (A). The particle diameter of the dispersed polylactone (B) in the PVA-based resin (A) is in the range of usually 0.001 to 3 µm, preferably 0.01 to 0.1 µm. If a dispersed polylactone (B) has an unduly large particle diameter, its water solubility tends to be lowered. If a dispersed polylactone (B) has an unduly small particle diameter, the flexibility of the resulting support material tends to be lowered. The above-mentioned particle diameter of the dispersed polylactone is an average value of the particle diameters measured based on the SEM image for 10 to 30 particles. These particles are randomly selected islands (domains) in the SEM image.

The support material may exhibit excellent moldability based on the seaisland structure described above. Thus, in the case that a long filamentous support material having from 1.5 to 3.0 mm in diameter is produced by continuous extrusion molding, the fluctuation range of the diameter can be suppressed within the range of ±0.05 mm or less, preferably ±0.04 mm or less. Furthermore, since the obtained filaments are excellent in flexibility, the filaments may be not broken or torn during the winding process of the filament around a reel and the printing process for a complicated three-dimensional shape. This means a productivity both of the support material and fused deposition modeled structure is excellent. Furthermore, the support material exhibits excellent water solubility due to the fact that the polylactone particle can be finely dispersed in the PVA-based resin matrix, as a result, the treatment of the waste liquid generated after the removal operation using water may be made easy.

### (3) Other ingredients

### (3-1) Filler

The support material of the present invention may contain a filler, preferably a biodegradable filler. Examples of the biodegradable filler include starch, cellulose, biodegradable plastic and the like. The average particle size of the filler is usually from 0.5 to 10 µm, preferably 1 to 5 µm, particularly preferably 2 to 3 µm. Unduly small filler may be hardly incorporated into the resin during kneading operation. Unduly large filler may provide a support structure with a rough surface and insufficient strength. The average particle diameter in the invention is a particle diameter D₅₀ measured by the laser diffraction method.

The amount of the filler contained in the support material is preferably from 1 to 40% by weight, more preferably from 2 to 30% by weight, particularly preferably from 3 to 10% by weight. If the amount is unduly small, the filler may not give a desirable effect. If the amount is unduly large, the filler may impair the smoothness of the filament surface and lower the filament strength.

### (3-2) Plasticizer

The support material may contain a plasticizer. However, a relatively low content of the plasticizer is preferred from the viewpoint of improving the molding stability of the support material. A preferable content of the plasticizer in the support material is 20% by weight or less, particularly 10% by weight or less, more particularly 1% by weight or less, and further more particularly 0.1% by weight or less.

A biodegradable plasticizer is preferably used because of sustaining the biodegradability of the support material.

### (3-3) Another additive

In addition to the above-mentioned ingredients, the resin composition for a supporting material of the invention may contain a conventional additive such as antioxidant, colorant, antistatic agent, ultraviolet absorber, lubricant. Also, another thermoplastic resin may be contained according to needs. However, in the case of containing an additive, a biodegradable additive may be chosen for sustaining the biodegradability of the supporting material.

### (4) production of support material for fused deposition modeling

A support material which is a composition containing the above-mentioned components is usually supplied in the form of a long filament. Specifically, the filament is drawn from a reel in which the filament is wound around a spool.

A filamentous support material is generally obtained, for example, by preparing a resin composition by mixing components, extruding the resin composition into a strand with an extruder, and solidifying by air cooling or water cooling. The resulting filamentous material is wound around a reel to be supplied in a market.

The diameter of the filament which is a fiber diameter of the filamentous support material is not particularly limited, but is usually from 1.5 to 3.0 mm, preferably 1.7 to 2.85 mm. The support material of the invention has a small variation in fiber diameter. Specifically, the desired fiber diameter may have a derivation within a range of ±0.05 mm or less, preferably about ±0.04 mm.

In addition, the support material of the present invention is excellent in flexibility and toughness, so it is less likely to be broken or torn while winding the filamentous support material around a reel. Therefore, the inventive support material in the form of filament with high uniformity in fiber diameter, can be provided, or delivered as a wound body of the long filamentous support material. As a result, even a relatively large fused deposition modeled structure can be produced by continuously supplying a filament without interrupting the printing process because the reel of the support material does not need to be replaced during the printing process. Moreover, an object having a complicated shape may be created because the filamentous support material is sufficiently flexible, and moreover a fused deposition modeled structure with high dimensional accuracy may be produced because the filamentous support material has a highly uniformity in fiber diameter.

### [Manufacturing method of fused deposition modeled structure and three-dimensional object]

The method of manufacturing a fused deposition modeled structure of the present invention includes a step of depositing an inventive support material and a model material both in a molten state. A fused deposition modeled structure is a product produced by the method and is an intermediate obtained in a production of a three-dimensional object having a desired shape. The three-dimensional object is a structure of the model material. The intermediate includes a support structure made of the saponified support material and a structure made of the solidified model material which is infilled with the solidified support material.

A method of manufacturing a three-dimensional object of the invention is a method for forming a structure of model material that is a three-dimensional object having a desired shape, by a fused deposition modeling. In the fused deposition modeling, an inventive support material is used. The method comprises bringing the fused deposition modeled structure, which is produced by the inventive method, into contact with water.

As the model material used in the inventive manufacturing method for the fused deposition modeled structure or three-dimensional object, a thermoplastic resin such as polylactic acid (PLA), acrylonitrile-butadiene-styrene copolymer (ABS), polyamide (PA), polycarbonate (PC), polyethylene terephthalate (PET), glycol-modified polyethylene terephthalate (PETG), polyhydroxyalkanoate (PHA) and the like; a composite such as wood-filled composite, metal-filled composite, carbon fiber-filled composite and the like; polyvinyl butyral (PVB), thermoplastic elastomer (TPE), thermoplastic polyurethane (TPU), polyolefin, polypropylene (PP), acrylonitrile styrene acrylate (ASA), polyacrylate, polymethacrylate, polystyrene (PS), polyoxymethylene (POM), and mixtures thereof may be used.

Among these, PLA, ABS, PA, PETG, and PC are preferably used from the viewpoint of adhesion with the support material of the invention.

An apparatus used in a method of manufacturing a fused deposition modeled structure may be a fused deposition modeling type apparatus equipped with multi nozzle heads for extruding molten model material and molten support material independently. The fused deposition modeling type apparatus includes a dual head type FDM type 3D printer such as Creator manufactured by FlashForge, Eagleed manufactured by Rays Enterprises, MBot Grid II manufactured by 3D Systems, NJB-200W manufactured by Ninjabot, and EVO manufactured by Airwolf.

In the case of fused deposition modeling printer, the modeling material is provided in the form of strand or filament. The model material and the support material are supplied in the form of the strand or filament to separate heads of the fused deposition modeling apparatus, subsequently they are heated and molten at their nozzle heads, so as to be placed onto a print bed to form a structure layer by layer.

The materials are molten at a temperature of usually 150 to 300°C, and extruded at a pressure of 200 to 1000 psi, at their respective heads. The stacking pitch is usually from 100 to 350 µm.

Both of extruded support material and model material extruded in a molten state are solidified by cooling, and subsequently the extruded support material and model material are laid on top of the layer made of the previously solidified support material and solidified model material. Thus produced structure or fused deposition modeled structure includes a target model made of the model material.

The step of bringing a fused deposition modeled structure into contact with water is a process of removing the support structure by use of water, from the fused deposition modeled structure composed of a target model and the support structure. This removal process may be conducted by immersing the fused deposition modeled structure in water or warm water, or by washing the fused deposition modeled structure with running water. In order to shorten the immersion period for dissolving the support structure, the water may be stirred or exposed to an ultrasonic wave. The water used in the removal process may have a temperature of preferably about 25 to 80°C. An amount of water or warm water used for the dissolution is about from 10 to 10000 times as much as the weight of the support structure.

Even a three-dimensional object (target model) having a complex shape with overhangs can be produced by the removal of the support structure from the fused deposition modeled structure.

It takes about 45 minutes, preferably about 40 minutes, to dissolve (B) polycaprolactone which is a water-insoluble component until the polycaprolactone cannot be visually confirmed in the waste liquid (PVA-based resin aqueous solution) after the washing operation by use of water. Therefore, the waste liquid after the removal process by washing may be directly disposed or drained after being left for about 45 minutes. Since polylactone such as polycaprolactone contained in the waste liquid is biodegradable, the problem of environmental pollution caused by the waste liquid can be avoided.

### EXAMPLES

Hereinafter, the present invention will be described in more detail with reference to examples, but the present invention is not limited to the following examples as long as the gist of the invention is not exceeded. In the example, "part" means a weight basis.

### [Method for producing support material]

A PVA-based resin and polycaprolactone were charged to a twin-screw extruder (manufactured by TECHNOVEL CORPORATION., L / D = 60, 15 mmφ) at a predetermined ratio, through a charging port for raw material, and kneaded at 230°C in an extruder (screw speed: 200 rpm). The kneaded resin composition was discharged in the form of strand, air-dried, and subsequently cutting the strand with a fan cutter, thereby obtaining pellets of the resin composition.

The pellets produced by the above-mentioned extruder were supplied to a single screw extruder, and melt-kneaded under the conditions shown below, following by extruding in the form of strand having a diameter of 1.75 mm, and air-cooled on a belt. The strand was wound around a reel (spool diameter: 20 cm), thereby obtaining a reel of the filamentous support material.
Single-screw extruder (TECHNOVEL CORPORATION): 20 mmφ, UD=24, "SZW20GT-24MG-STD"
Extrusion temperature pattern: C1/C2/C3/H/A/D=160/180/190/190/190/190°C
Rotation speed: 20 rpm
Discharge rate: 1.0 kg/hour

### [Evaluation method]

### (1) Deviation of filament fluctuation

The filament produced above was measured with respect to its diameter and the maximum deviation (±mm) from 1.75 mm in the diameter along a length of 20 m of the filament was determined. The smaller the maximum deviation, the more stable diameter the filamentous support material had.

### (2) Flexibility

The filament of the support material drawn from the reel of the filament was manually wound 10 times around a tube having a diameter of 15 mm. The number of tears in the filament after the winding operation was counted.

### (3) water solubility

The filaments produced above was cut into pellets each having a length of 5 mm. The resulting pellets 5g were immersed in 500 ml of water (80°C) and stirred with a stirrer. The time period (minutes) until the pellets could not be visually confirmed was measured. The shorter the time, the better water solubility the support material has. In addition, the case where the insoluble matter was remained even after stirring for 1 hour was assessed as "insoluble".

### [Manufacturing of support material]

The compounds used as components contained in the composition are as follows.

### (1) PVA-based resin

Unmodified polyvinyl alcohol having a saponification degree of 79 mol% and an average polymerization degree of 370 was used.

### (2) Polylactone

Five types of polycaprolactones each having a number average molecular weight of 10000, 25000, 37000, 50000 or 80000 were used.

### Support material Nos.1 through 13

Filamentous support material Nos.1 through 13 were prepared from a resin composition obtained by mixing 100 parts by weight of PVA-based resin with polycaprolactone at the ratio shown in Table 1, based on the production method described above.

The support material prepared were measured and evaluated with respect to deviation of filament diameter, flexibility, and water solubility according to the early mentioned evaluation method. The results are shown in Table 1.

**[Table 1]**

| No | polycaprolactone | | evaluation | | |
|---|---|---|---|---|---|
| | number average molecular weight | amount (part) per 100 parts of PVA | deviation of filament diameter (mm) | flexibility (count) | water solubility (min) |
| 1 | 50000 | 43 | ±0.04 | 0 | 44 |
| 2 | 80000 | 43 | ±0.06 | 0 | insoluble |
| 3 | 10000 | 43 | ±0.06 | 10 | 60 |
| 4 | 25000 | 43 | ±0.04 | 0 | 40 |
| 5 | 37000 | 43 | ±0.04 | 0 | 38 |
| 6 | 50000 | 11 | ±0.02 | 10 | 35 |
| 7 | 50000 | 18 | ±0.04 | 10 | 45 |
| 8 | 50000 | 25 | ±0.04 | 10 | 44 |
| 9 | 50000 | 33 | ±0.04 | 0 | 40 |
| 10 | 50000 | 50 | ±0.03 | 0 | 39 |
| 11 | 50000 | 60 | ±0.04 | 0 | 39 |
| 12 | 50000 | 67 | ±0.02 | 1 | insoluble |
| 13 | 50000 | 82 | ±0.04 | 0 | insoluble |

As can be seen from the comparison among Nos. 1 through 5, when the polycaprolactone had a number average molecular weight of 20000 to 70000 (Nos. 1, 4 and 5), the fluctuation range of the filament diameter was ±0.05 mm or less, which means excellent diameter stability. In addition, the flexibility was excellent, and the time period for dissolution using water was less than 45 minutes.

On the other hand, when the number average molecular weight of the polycaprolactone exceeded 70000 (No. 2), the filament diameter deviation was large, and the undissolved support material was remained even after being left for 1 hour. When the polycaprolactone had a number average molecular weight of less than 20000 (No. 3), the deviation of the filament diameter became large. Although the support material could be dissolved in water, it took a longer period to dissolve than the support material containing polycaprolactone having a number average molecular weight of 20000 to 70000. In addition, the filament flexibility was impaired.

As can be seen from the comparison among Nos. 1 and 6 through 13, the support material Nos. 1 and 9 through 11, each of which contained polycaprolactone at an amount of 27 to 60 parts by weight per 100 parts by weight of the PVA-based resin, were excellent in filament diameter stability and flexibility. The time period for dissolution using water was also less than 45 minutes. When the content of polycaprolactone was reduced (Nos. 6 through 8), the filament diameter stability and the time period for immersion in water did not get worse, in fact, the time period tended to be shortened. However, even with polycaprolactone having a number average molecular weight of 20000 to 70000, the flexibility of filaments was impaired when the blending amount was small (Nos. 6 through 8).

When the polycaprolactone content was high (Nos. 12 and 13), the filament diameter stability and flexibility were not recognized to be lowered. However, even with polycaprolactone having a number average molecular weight of 20000 to 70000, the increase in the amount of the caprolactone impaired the water solubility.

### INDUSTRIAL APPLICABILITY

The support material of the present invention may be provided in the form of long filament of filamentous support material with excellent dimensional accuracy and flexibility. Furthermore, since the support material can be removed by washing with use of water after the fused deposition modeling, the productivity of the intended three-dimensional object is excellent. Moreover, the generated waste liquid is a biodegradable aqueous solution, so that the waste liquid treatment is simple. Accordingly, the support material is useful.

## Claims

1. A support material for fused deposition modeling comprising (A) a polyvinyl alcohol-based resin and (B) a polylactone, wherein the (B) polylactone has a number average molecular weight of 20000 to 70000.

2. A support material for fused deposition modeling comprising (A) a polyvinyl alcohol-based resin and (B) a polylactone, wherein the (B) polylactone is contained in an amount of 27 to 60 parts by weight per 100 parts by weight of the (A) polyvinyl alcohol-based resin.

3. A support material for fused deposition modeling comprising (A) a polyvinyl alcohol-based resin and (B) a polylactone,
wherein the (B) polylactone has a number average molecular weight of 20000 to 70000, and
wherein the (B) polylactone is contained in an amount of 27 to 60 parts by weight per 100 parts by weight of the (A) polyvinyl alcohol-based resin.

4. The support material for fused deposition modeling according to any one of claims 1 to 3, wherein the polyvinyl alcohol-based resin (A) has a saponification degree of 72 to 80 mol%.

5. The support material for fused deposition modeling according to any one of claims 1 to 4, wherein the polylactone (B) is polycaprolactone.

6. The support material for fused deposition modeling according to any one of claims 1 to 5, wherein the polylactone (B) has a melting point of 50 to 80°C wherein the melting point is measured by differential scanning calorimetry.

7. The support material for fused deposition modeling according to any one of claims 1 to 6, being in the form of filament having a diameter of 1.5 to 3 mm.

8. A method of manufacturing a fused deposition modeled structure, the method comprising supplying a molten model material and the support material for fused deposition modeling according to any one of claims 1 to 7 in a molten state, on top of the previously deposited model material or support material.

9. A method of manufacturing a three-dimensional object, the method comprising contacting a fused deposition modeled structure with water, wherein the fused deposition modeled structure is produced by the method of claim 8.
